# EUROPEAN PATENT APPLICATION

(11) **EP 4 528 610 A1**
(43) Date of publication of application: **26.03.2025**
(21) Application number: 24201497.5
(22) Date of filing: 19.09.2024
(51) Int. Cl.: G06Q 10/04, G05B 13/02, G06F 1/26

(54) **SYSTEM FOR REDUCING LARGE-SCALE DATA TO SAVE ENERGY AND INCREASE THE EFFICIENCY OF LINEAR AND NON-LINEAR OPERATIONAL PARAMETER SYSTEMS IN INDUSTRIES**

(30) Priority: 20.09.2023 CZ 20230366
(71) Applicant: Spolecnost pro vyzkum a vzdelavani, s.r.o., 51101 Turnov (CZ)
(72) Inventor: EHRLICH, Jiri, 11800 Praha (CZ)
(74) Representative: Kratochvil, Vaclav

(57) **Abstract**

The invention relates to a system for reducing large-scale data in order to save energy and increase the efficiency of linear and non-linear operational parameter systems in network industries, including energy networks, that comprises a control block (11) for operational and design parameters of network industries, to which an evaluation device (1) interconnected with meters in a selected community or otherwise defined territory (6) and equipped with a decision block (10) to correct a numerical model from the evaluation device (1) is connected, which is connected with a server (5) to a database of values of 01-n events, provided with a procedure module (2) to which a control block (7), an evaluation local device (8) and a reduced procedure module (9) are connected, wherein the reduced procedure module (9) is connected via a reconstruction block (3) to the decision block (10), and the evaluation local device (8) is connected to the evaluation device (1) and the output to the control block (7). The network industry is generalized from the group of electricity network, water supply network, gas supply network, heat supply network, sewerage, transport, and lighting.

## Description

### Technical Field

Machine learning systems can be used in industry, science, meteorology and other large-scale data collection and processing areas. A reduced dynamic model is an algorithm applied to a linear or partial differential equation. As such, it is one of the most important reductions of technique dimensionality available for dealing with complex systems. Such systems represent typical examples of non-linear partial differential equations that describe evolution in time and space and solve physical, engineering or biological systems. In most complex systems, meaningful behavior is encoded in low-dimensional dynamic activity patterns. The technique of reduced dynamic models attempts to take advantage of this fact to solve dynamic systems that can accurately model the complete evolution of a complex system. Importantly, such models allow significant improvements in speed calculations, potentially enabling unendurably expensive simulations, optimizations over parameterized systems, or real-time control. The system of reduced dynamical models has been widely used in fluid dynamics, structural mechanics and vibration analysis, optical and MEMS technologies, atmospheric science, and other fields. It is the ability to provide physically interpretable decompositions from collected data of physical quantities. The proposed technological solution is designed for the evaluation of collected data for measurement, monitoring, diagnostics, data collection and management, and evaluation and regulation of linear system assemblies of transport and storage of media, water, heat, electricity or logistics elements, in the input, transformation, transmission, output and accumulation of media, control of consumption, and adjustment of levels according to the event history, with an emphasis on safety, economy, environment and quality of life of the population with interdisciplinary overlap and use.

In line with the EU's efforts, public authorities are exerting great pressure to improve the performance of Member States' economic and industrial sectors. This is largely taking place in the fields of energy saving, the introduction of circular economy systems, and digitalization. In all sectors, such as transport, logistics, telecommunications, and power or water engineering, the coexistence of small economic subjects with large corporations in regulated sectors and the introduction of community or communal systems are becoming increasingly important. These challenges cannot be met without introducing digitalization for efficiency and security and to preserve the principles of universality and accessibility of services to all citizens.

One of the ways to achieve this is through the independent production of heat, gas, electricity, or other commodities, through an energy community, a society, associations of property owners in apartment buildings, or by using other defined units.

Creating an energy community allows for municipalities and other units greater control over local energy management. It is a safe environment provided that the established rules are followed when using technical features of inspection, control, and accounting within the coexisting systems of the community linked to the parent units in the regulated sectors. At the same time, this approach strengthens the influence of local governments, i.e., units, in shaping the state's energy policy. Its advantage also consists of the direct involvement of residents, industry, and other stakeholders in the state's energy transformation. This includes participation in the European-wide Green Deal climate support program, Fit for 55, and follow-up structural transformation activities within the EU.

### Background Art

Currently, measurement and regulation (MaR) systems are used to control water management, energy, gas, and other systems and sectors. These systems are designed, operated, and optimized only for controlling technological procedures of network systems by a market operator, in the energy sector by an RDS distributor, or by a TS transmission system. These systems do not consider the interconnectedness and needs of other disciplines-segments without which the whole area of community, municipal, or regional power engineering cannot survive. Such an energy system usually consists of large energy sources (heat, electricity, gas, etc.) mostly emitting CO2 and are not designed to connect a larger number of small RES sources, their producers, or consumers (Prosumers).

Most control systems are operated and used for individual disciplines and parts of individual solution segments. This is independent control of, for example, the electrical system, gas system, heating system, etc. The communication and use of small producers and consumers are limited up to unrealized. The individual technical devices are very robust and expensive. Interfering with their functionality could undermine stability and safety, increasing the initial investment and subsequent operating costs. These are the same systems in the energy sector, industry, etc. This is the basic control of the operation of distribution and other systems and units, carried out by a central or local sophisticated dispatching control system, which is only for one area and one segment of equipment. This system processes the status and performance information for all elements of all substations as parts integrated into distribution and other systems. Furthermore, it collects and evaluates fault and emergency conditions needed for quality decision-making on only one device, i.e., one unit. The pre-processed data is then provided to dispatchers, who can thus manage their assigned parts of the distribution and other systems safely and efficiently. Using the remote control, the dispatcher can change the configuration of substations and redirect media flows exactly according to the customer's actual needs, but only on their own, single-defined device. These systems are defined, operated, and improved only for individual device types within the framework of control procedures. These include, e.g., Simatic, SCADA, etc. The systems are very robust and thus meet the requirements in complex, demanding conditions and systems. However, their price is very high, so their users mostly include distribution companies, namely the largest ones.

On the other hand, a system of community territory, community center, tenants' association, or other structure matching the definition of a community under the EU Recommendation can follow up on output data reflections (stimuli) and, without interfering with the robust control system disclosed above, evaluate this information and subsequently pass it on for operational, economic, and safety stimuli.

### Summary of the Invention

The above shortcomings are largely eliminated by a system for reducing large-scale data to form digital reduced dynamic models, in order to save energy and increase efficiency of linear and non-linear operational parameter systems in industries according to this invention. It collects data from the production of small sources, transport, logistics, and RES in the respective locality, collects data from the consumption of the energy produced in that way, and aggregates other data from the energy system. It also uses historical data from the system being operated to determine the system behavior according to the stimuli and creates behavioral scenarios to create a reduced dynamic model. In summary, it contains a control block of operational and design parameters of energy devices, an evaluation device being connected thereto that is linked to meters installed in the affected community territory or of other organizational arrangement and equipped with a decision-making block to correct the numerical model of the evaluation device, which is linked to a server with a database of values of 01-n events, equipped with a procedure module to which a control block, an evaluation local device, and a reduced procedure module are connected, wherein the reduced procedure module is connected via a reconstruction block to the decision-making block, and an output of the control block of the evaluation device is connected to the evaluation local device to adjust the operating and design parameters of the energy devices within the control block.

The energy network is selected from the group of the electrical network, water supply network, gas supply network, heat supply network, sewerage, transport, hydrogen supply network, lighting, and other equipment.

The control block for controlling, measuring, and regulating electrical energy (MaR) provides measurement and regulation. This is, for example, the standard for control systems. Information on operational and design parameters is brought from it via a transmission system, optical, electrical, data, or wireless environment. The evaluation device creates a numerical reduced dynamic system model for network control purposes. This is the basis for controlling, monitoring and managing the power transmission system, or waterworks systems, heating systems, etc.

The first task, creating a numerical model, commonly known as a MaR system, is usually a licensed product for system or network control by a system operator. Based on input data, such as the device's design and the parameters based on which it is operated, the output is a result using which the energy device is controlled, regulated, and managed. This can be local flows, local pressures, vibrations, unstable circulation, etc.

There is another server with an event database generated by random procedures of the whole system. The database describes the values of events according to the time when they occurred (Results No. 1 ... to Results No. n). Connected to this additional database server is a procedure module with a reduced procedure module consisting of individual events 01-n of the case database. The reduced module is created from a database of known inputs and outputs. This reduced model then gives a calculated set of outputs for a slightly different set of inputs. Thanks to this, the system does not have to recalculate over and over again all possible events that may occur when the technical parameters of the system are recalculated from all values that their design allows, i.e., from the extreme minimum to the extreme maximum, but creates a reduced model that contains only those events that occurred in the past. This will simplify and speed up the system.

These individual cases are identified by their values. A database of cases is created, and the computational complexity of mathematical models in numerical simulations is reduced through a reduced (dynamic) module-model order reduction (MOR).

There is an online reconstruction block into which selected cases from the reduced module are brought via a cellular or optical data transmission network or a 5G network. Based on the provided parameters, it selects one of the predefined scenarios for solving the dynamic model.

Through the transmission environment, the selected calculated and predefined scenario is brought to the decision device, where the data from the evaluation device is corrected and subsequently adjusts the numerical model to a state that modifies or corrects the settings of the individual elements of the control block.

Signals that pass through the data transmission system can be encoded by an encoder en route and decoded before being used to correct the individual elements of the control system.

By this method, a numerical model of the community center is created, i.e., an evaluation device, which allows to correct the control system of the community distribution territory in the energy sector by properties thereof and proves its correct function through feedback, i.e., by identifying the system change so as to solve the sudden change of the situation caused by climatic or other environmental changes. According to the preset outputs, the above-disclosed system is corrected manually directly by the dispatcher or automatically with dispatcher supervision.

The device allows to operate and adjust the operational parameters of the energy system or other system concerning the past, present, and expected future values of temperatures and flows in energy, heat, other networks and devices, quantities and values thereof; either it gives recommendations to the relevant MaR operator of other control device and dispatching center of community centers, or it allows automated control of procedures of the energy system, another system of other community.

A system of community centers that will help to reduce CO2 and furthermore be a system in the stabilization and implementation of RES (Green Deal) towards all systems. By deploying and operating the community system, the financial intensity of controlling and spending on individual commodity investments will be reduced. The overall production and consumption procedures will be balanced and economically acceptable. Security strategy and cost-effectiveness in the areas concerned, with an overlap to parent or related infrastructures, will be an integral part.

The system aggregates data from RES production and consumption in a defined territory, thus enabling emission reductions and increasing the efficiency of energy production and consumption.

The system enables a reduction in the economic intensity of energy production and consumption. It substantially reduces the cost of energy transmission to other locations by allowing energy to be consumed where it was produced.

The system ensures higher security, i.e., resilience of the energy system.

### Brief description of the Drawings

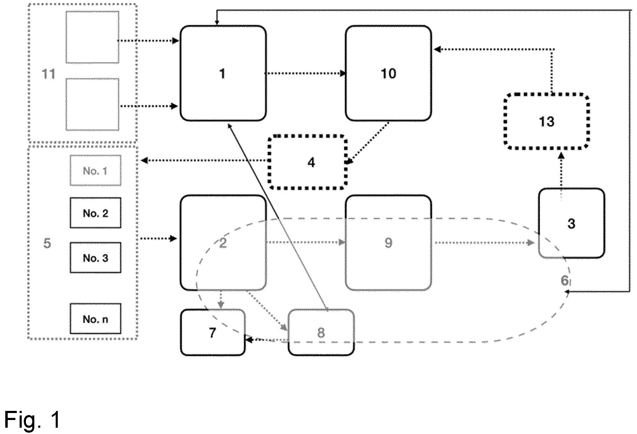

A system for reducing large-scale data to save energy and increase the efficiency of linear and non-linear operational parameter systems in industries according to this invention will be disclosed in more detail using a particular example embodiment with the aid of the accompanying drawing wherein a schematic of the arrangement is provided.

### Description of Embodiments

An exemplary device for reducing large-scale data to create a reduced dynamic model for energy conservation and efficiency improvement of linear and non-linear operational parameter systems in industries to correct the operation, measurement, and control of water management or other systems consists of specifically located measuring devices at inlets, outlets, sources, appliances, or other process equipment, etc. The system contains a control block 11 of the operational and design parameters of energy devices, wherein an evaluation device 1 connected to the meters in the affected territory 6 and equipped with a decision-making block 10 to correct the numerical model of the evaluation device 1 is connected to the control block. The decision-making block 10 is connected to server 5, which has a database of values of 01-n events and is equipped with a procedure module 2. A control block 7, an evaluation local device 8 and a reduced procedure module 9 are connected to the procedure module 2. The reduced procedure module 9 is connected to the decision-making block 10 via the reconstruction block 3. The evaluation device 1 and an output to the control block 7 are connected to the evaluation local device 8.

The installed measuring devices are connected to a separate data collection circuit for data collection and transmission to the central database and evaluation part of the local device 8. The individual measuring devices are equipped with their own transmitters, which send data in specifically set optimal time frequencies via GSM technology, IOT, 5G, or other commercially available frequencies, or special technologies to the application, which functions as a parent evaluation device 1 of the measured data over the existing MaR system, or another system of other measurement and control. The time interval, i.e., the frequency of measurements and evaluation of measured values, is set to capture changes in physical values that are significant in terms of the operation of the energy system being monitored, other systems, districts, or circles of the entire area of the community center with overlap to other infrastructures such as critical infrastructure, transmission system, distribution system, environment, etc.

All data may be anonymized in encoder 4 for GDPR data protection reasons.

It continuously processes, stores, models, evaluates, predicts, alarms, distributes and transports the collected values from newly installed measuring devices together with the values of existing measuring devices and equipment in specific sequences.

The device observes, monitors, compares, evaluates, and influences the operational parameters of energy networks and other networks. Firstly, the output thereof is the signaling of non-standard and faulty conditions or phenomena in the energy network under question, other networks, and areas.

The device allows to operate and adjust the operational parameters of the energy system or other system concerning the past, present, and expected future values of temperatures and flows in energy, heat, other networks and devices, quantities and values thereof; either it gives recommendations to the relevant MaR operator of other control device and dispatching center of the, for example, created community, or it allows automated regulation of procedures of the energy system, other community energy system.

The equipment also allows optimization and reduction of pollution sources, appropriate energy accumulation, and creation of individual models for the location of efficient RES sources, other sources depending on energy needs, and other systems. It also takes care of the nature of security, stability of individual networks, and optimal location of, e.g., power supply systems for cars, technology, and equipment. It creates an energy and transport model, calculates the impacts of the transition to carbon-free transport, e.g., hydrogen and LNG, and determines the necessary investments in terms of value for money. The model takes into account energy needs, i.e., calculation of production and consumption, guaranteed required input power of individual subjects and areas, and transport and climate needs for the transformation of transport, logistics, and public administration, with an overlap on the environment. Based on a database on vehicle movements and optimization of their routes, their composition, energy/fuel consumption, air quality impacts, noise and other environmental impacts, and urban use of renewable resources, i.e. spatial optimization of production and distribution of energy, fuel, heat, and other media.

The community system, as defined in the EU programs and the legislative conditions for community energy being prepared in the Czech Republic, is also capable of evaluating and using system services as an aggregator with the transition to Blockchain, which is a special kind of distributed decentralized database in informatics, storing a constantly expanding number of records that are protected against unauthorized interference from the outside as well as from the peer-to-peer network nodes themselves. The most common application of Blockchain technology is as a ledger for cryptocurrencies such as Bitcoin, which stores user transactions, or a Billing system. The combination with cryptography ensures operations' anonymity and prevents unauthorized transactions.

The technical interconnection of the existing infrastructure used for energy transmission will be prepared for other project participants through in-depth analysis. It is characterized by the gradual construction and connection of energy sources (RES), energy consumers, accumulations, or combined forms. These subjects will be connected by existing or newly built infrastructure and metering points to share energy, information, and data within the community.

The system enables technical interconnection of energy with the distributor of energy infrastructure or other infrastructure and the manager of the transmission system-another system. This allows flexibility of sources and aggregation of data for energy purposes and other purposes to ensure the stability of the electricity network, another network, or system.

Within the proposed system, a dynamic reduced system model is created for controlling the energy system, which as a whole functions as a data matrix of dispatching control = Online Reconstruction, which is characterized by a reduced system model that is used to influence the dynamic model of the power system, other systems and entities simply and safely, wherein the original control system through the MaR system is not replaced and is not compromised in any way.

The technical interconnection will allow the sharing of technical, economic, and other data for mutual technological procedures and stability, as well as for charging a price for the energy produced or consumed, mutual clearing of this price to achieve a return on the invested funds, and to allow payment for network flexibility, namely for network flexibility provided by the community or network flexibility consumed from the distributor, the manager of the transmission system-another electricity system-and energy and other networks. In addition, the system, referred to as the Economic Hub, will allow the cost of energy production for state administration use to be demonstrated. It is about demonstrating the renewable energy consumption that will be declared and effectively increased under the GDSS program, linked to the security and stability of the networks and other segments. Create conditions for citizens and companies to participate in the opportunities and benefits of energy and other media savings.

In the case of Blockchain, it is a security feature that can perform several functions within a community or municipal service, both technical, technological, and data, as well as economic. Since energy will be in surplus in certain procedures, i.e., negative energy, its use can be transformed into, e.g., cryptocurrencies, other currencies, etc. These economic and technological transfers will be traded both within the community and towards external energy, economic, and other infrastructure.

### Definition of terms:

### GSM, 5G

Mobile telecommunications networks use base stations to cover the territory; these stations are operated by individual cells, i.e., sectors into which the territory is divided. Mobile networks are built based on 3GPP standards. The conditions and strategic objectives of the EU were set out in the "5G Action Plan for Europe" and for the Czech Republic in the document "Implementation and Development of 5G Networks in the Czech Republic-Towards the Digital Economy".

### Green Deal

The European Green Deal is a set of policy initiatives by the European Commission with the main objective of making Europe climate-neutral by 2050. Fit for 55 is the European Commission's package of legislative proposals to reduce European greenhouse gas emissions by 55% by 2030 compared to 1990 levels. This target is an intermediate step towards achieving carbon neutrality by 2050, to which the European Union has legally committed itself.

### RES

### Renewable energy sources

### Flexibility

A change in the amount of electricity withdrawn from or delivered to the TS (Transmission System) or DS (Distribution System) in a given time interval compared to the agreed/assumed consumption or delivery diagrams in response to price signals or a command. Flexibility also applies to accumulation, both for the use of energy storage and for support services in the context of network (device) stabilization at all levels. Overall management of energy flows and other phenomena within the cluster, with overlap to individual partners and cooperating subjects.

### Aggregator

An aggregator is a market participant that aggregates the flexibility of individual flexibility providers to sell standard products in the electricity and/or ancillary services or other services markets as appropriate or to adjust its own position. The transmission system operator and the distribution system operator are not considered to be aggregators. The aggregator is a strategic actor within the Local Distribution Area that coordinates and manages the flow of individual commodities and data in the area and is the coordinator and resolver of complex services outside the defined area.

### MaR

Measurement and regulation

### RDS

Regional distribution system

### TS

Transmission system

### Industrial Applicability

The technical solution in question, embedded in the community created by the legal act, can be used in any place of self-government, extra- or intra-villain. In addition, the use in the case of industrial premises, defined areas is without limitation of acreage and location.

## Claims

1. A system for reducing large-scale data in order to save energy and increase the efficiency of linear and non-linear operational parameter systems in industries, in particular energy networks, ***characterized in that*** it comprises a control block (11) for operational and design parameters of energy devices, to which an evaluation device (1) interconnected with meters in a community territory (6) and equipped with a decision block (10) to correct a numerical model from the evaluation device (1) is connected, the decision block (10) is connected by a server (5) to a database of values of 01-n events, provided with a procedure module (2) to which a control block (7), an evaluation local device (8) and a reduced procedure module (9) are connected, wherein the reduced procedure module (9) is connected via a reconstruction block (3) to the decision block (10), and the evaluation local device (8) is connected to the evaluation device (1) and the output to the control block (7).

2. The system according to claim 1, ***characterized in that*** the energy network is selected from the group consisting of an electricity network, water supply network, gas supply network, heat supply network, sewerage, transport, and lighting.
